# EUROPÄISCHE PATENTSCHRIFT

(11) **EP 1 183 525 B1**
(45) Veröffentlichungstag und Bekanntmachung des Hinweises auf die Patenterteilung: **20.09.2006**
(21) Anmeldenummer: 01919284.8
(22) Anmeldetag: 15.02.2001
(51) Int. Cl.: G01N 21/64, G02B 21/00

(54) **VERFAHREN ZUR DETEKTION DES VON EINER PROBE KOMMENDEN LICHTES**
METHOD FOR DETECTING THE LIGHT COMING FROM A SAMPLE
PROCEDE POUR DETECTER LA LUMIERE PROVENANT D'UN ECHANTILLON

(30) Priorität: 22.02.2000 DE 10008594
(43) Veröffentlichungstag der Anmeldung: 06.03.2002
(73) Patentinhaber: CARL ZEISS JENA GmbH, 07745 JENA (DE)
(72) Erfinder: JANKA, Reinhard, 07749 Jena (DE); JÜNGEL, Volker, 07747 Jena (DE); JANKOWSKI, Tilo, 14532 Güterfelde (DE); HECHT, Frank, 99425 Weimar (DE)
(86) Internationale Anmeldenummer: PCT/EP2001/001663
(87) Internationale Veröffentlichungsnummer: WO 2001/063259

(56) Entgegenhaltungen:
- WO-A-94/16313
- US-A- 5 079 169
- PETERSEN N O ET AL: "Quantitation of membrane receptor distributions by image correlation spectroscopy: concept and application" BIOPHYSICAL JOURNAL, SEPT. 1993, USA, Bd. 65, Nr. 3, Seiten 1135-1146, XP001000182 ISSN: 0006-3495
- WISEMAN P W ET AL: "Dynamic image correlation spectroscopy (ICS) and two-color image cross-correlation spectroscopy (ICCS): concepts and application" THREE-DIMENSIONAL AND MULTIDIMENSIONAL MICROSCOPY: IMAGE ACQUISITION PROCESSING VII, SAN JOSE, CA, USA, 23-24 JAN. 2000, Bd. 3919, Seiten 14-20, XP001005572 Proceedings of the SPIE - The International Society for Optical Engineering, 2000, SPIE-Int. Soc. Opt. Eng, USA ISSN: 0277-786X
- HONG QIAN ET AL: "ANALYSIS OF CONFOCAL LASER-MICROSCOPE OPTICS FOR 3-D FLUORESCENCE CORRELATION SPECTROSCOPY" APPLIED OPTICS,US,OPTICAL SOCIETY OF AMERICA,WASHINGTON, Bd. 30, Nr. 10, 1. April 1991 (1991-04-01), Seiten 1185-1195, XP000202077 ISSN: 0003-6935
- DIASPRO A ET AL: "Three-dimensional fluorescence microscopy in two-photon excitation regime" PROCEEDINGS OF THE FIRST JOINT BMES/EMBS CONFERENCE. 1999 IEEE ENGINEERING IN MEDICINE AND BIOLOGY 21ST ANNUAL CONFERENCE AND THE 1999 ANNUAL FALL MEETING OF THE BIOMEDICAL ENGINEERING SOCIETY (CAT. NO.99CH37015), PROCEEDINGS OF THE FIRST JOINT BMES/, Seite 1093 vol.2 XP001005601 1999, Piscataway, NJ, USA, IEEE, USA ISBN: 0-7803-5674-8

## Beschreibung

Die Fluoreszenz-Korrelations-Spektroskopie (FCS) mit ihrer Realisierung in einem Mikroskopaufbau (FCM) bewährt sich insbesondere dort zur Untersuchung biomolekularer Wechselwirkungen, wo die Untersuchungen in sehr geringen Konzentrationsbereichen kleiner 1µMol und in Meßvolumina kleiner 10⁻¹⁴ I stattfinden¹. Solange die zu untersuchenden Proben homogen sind, spielt der Meßort nur eine untergeordnete Rolle. Im Falle von strukturierten Proben wie zum Beispiel biologischen Zellen, ist die Kenntnis bzw, die Auswahl des Meßortes aber von entscheidender Bedeutung. Diese Kenntnis über den MeßOrt wurde bisher über klassische Durchlicht-bzw. Auflicht-Mikroskopie gewonnen. Dazu wurde z.B. zwischen der FCS-Detektionseinheit und einer klassischen Fluoreszenzmikroskopanordnung umgeschaltet. Die Anwendung der klassischen Mikroskopie hat mehrere Nachteile. Einerseits werden dabei die Proben einer hohen Strahlungsbelastung ausgesetzt, andererseits kann der optimale Meßort im dreidimensionalen Koordinatensystem nicht mit der erforderlichen Präzision von weniger 1 µm lokalisiert werden.

WO 9416313 beschreibt ein "Laser-Korrelations-Mikroskop" mit Einzellaser und Einzeldelektor, wobei über eine Tischsteuerung unterschiedliche Probenpukte einzeln angesteuert werden.

US5079169 beschreibt eine Synchronisterung einer videokamera mit Laserpulsen zur Durchführung von Fluoreszenz-Lebensdauermessungen

In Petersen et al: "Quantitation of membrane receptor distributions...."(Biophysical Journal, Sept. 1993, USA, Bd.65,Nr. 3,S.1135-1146) wird eine Korrelation von mittels eines LSM erzeugten Fluoreszenzbildem zueinander zur Rauschunteredrückung beschrieben.

Wiseman et al " Dynamic image correlation spectroscopy..."SPIE Proceedings ISSN0277-786X, San Jose CA 23.-24.Jan2000 beschreiben die Korrelationsspektroskopie und die Kreuzkorrelationsspetroskopie.

Hong Qian et al "Analysis of Confocal Laser-Microscpe...", Applied Optics Bd, 30, Nr. 10, April 1991, S.1 185-1195 beschreiben in gesonderten Abschnitten konfokale Scanningmikroskope und FCS Messungen.

Diaspro et al" Three-dimensional fluorescence microscopy..."Proceedings of the first joint BMES 1999, vol.2, XP001005601 beschreiben ein LSM mit Zweiphotonenanregung.

Die in den Patentansprüchen sowie anhand der bildlichen Darstellungen unten beschriebenen Verfahren ermöglichen vorteilhaft die Erweiterung der FCS Methode zu einem bildgebenden Verfahren (S-FCM). Damit können Aussagen zur räumlichen Verteilung der zu untersuchenden molekularen Wechselwirkungen gewonnen werden.

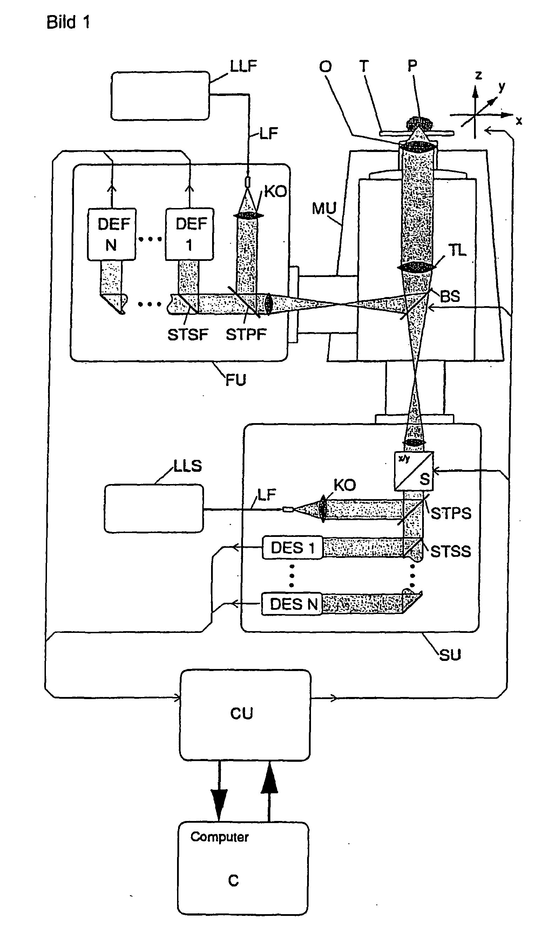

In Bild 1 ist eine erste vorteilhafte Anordnung dargestellt.

Mit einer Mikroskopeinheit MU (hier ein inverses Mikroskop zur Beobachtung einer auf einem in x-, y- und z-Richtung verstellbaren Tisch T befindlichen Probe P über ein unterhalb der Probe angeordnetes Objektiv O und eine Tubuslinse TL) wird mit Hilfe einer Scaneinheit SU Licht aus einer Laserlichtquelle LLS mit einer oder mehreren Wellenlängen direkt oder durch eine Lichtleitfaser LF über eine Kollimationsoptik KO sowie einem primären Strahlteiler STPS in eine Probe fokusiert. Der Scannner S erlaubt das Ablenken des Lichtstrahles in x- und y-Richtung, die Erfassung unlerschiedlicher Probenschichten kann durch die vertikale Verstellung des Probentisches T oder des Objektives O erfolgen. Das von der Probe kommende Licht durchläuft wieder den Scannner S und wird mittels der sekundären Strahlteiler STSS 1...N den Detektionskanälen DES1...N zugeordnet und in elektrische Signale zur Auswertung über eine Kontrolleinheit CU in einem Computer C umgewandelt. Die gemessenen Signale werden zur Gewinnung von Bildinformationen genutzt. Mit Hilfe einer Strahlumschaltungseinheit BS, beispielsweise eines ein- und ausschwenkbaren Vollspiegels oder teildurchlässigen Spiegels wird Licht LLF aus einer Laserlichtquelle mit einer oder mehreren Wellenlängen mit Hilfe einer FCS-Einheit FU über einen primären Strahlteiler STPF in die Probe fokusiert.

Die Lichtquellen LLS und LLF können auch identisch sein und über geeignete Umlenk- und Schaltelemente in die Einheiten SU bzw. FU eingekoppelt werden.

Das von der Probe kommende Fluoreszenzlicht wird durch sekundäre Strahlteiler STSF 1...N in einen oder mehrere FCS-Detektionskanäle DEF 1... N geleitet und zur Auswertung in elektrische Signale umgewandelt und der Kontrolleinheit CU übermittelt. Die Signale werden zur FCS-Analyse verwendet.

Je nach Anzahl der installierten Detektionskanäle kann es sich um Auto-oder Kreuzkorrelationsanalysen handeln.

Hierbei werden am aktuellen Probenort beispielsweise Diffusionszeiten, Teilchenzahlen, Lebensdauern, Anteile von Komponenten ermittelt.

Die Datenaquise wird für beide Detektionseinheiten von der gleichen Kontrolleinheit CU und einem Computer C mit geeignetem Programm gesteuert. Ebenso erfolgt die Steuerung des Probentisches T, der vertikalen Objektiveinstellung des Objektives O und der Strahlumschaltungseinheit BS durch diese computergesteuerte Kontrolleinheit. Durch die integration einer FCS-Detektionseinheit in ein konfokales Laser-Scanning-Microskop-System ergibt sich somit die Möglichkeit, auch FCS-Analyseergebnisse von Messungen an verschiedene Probenorten zu einem bildhaften Ergebnis zu kombinieren. Dadurch ergibt sich eine vorteilhafte Anordnung, die geeignet ist, FCS-Meßorte probenschonend mit hoher Genauigkeit festzulegen und andererseits auch FCS-Analysenergebnisse von Messungen an verschiedenen Orten zur Bildgebung zu verwenden.

Beispielsweise ist es vorteilhaft möglich, über unterschiedliche Farbgebung eine farbige flächenhafte oder räumliche Darstellung der Diffusionzeiten oder anderer Analysenergebnisse in Abhängigkeit vom meßort zu erzeugen.

Weiterhin kann durch speichermäßige Zuordnung das aufgenommene FCS Bild beispielsweise als Zusatzfarbe bildlich mit kanalweise andersfarbigen LSM-Bildem verknüpft werden.

Es können auch FCS/LSM Differenz- oder Quotientenbilder oder anderweitige Kombinationen gebildet und dargestellt werden.

Die erfindungsgemäße Modifikation des Laser-Scanning-Mikroskopes und die wirkungsmäßige Verbindung mit der FCS-Geräteeinheit erfolgt durch geeignete Programme im Computer mittels einer für alle Komponenten gemeinsamen Gerätesteuereinheit. Scaneinheit, FCS-Einheit, Mikroskopeinheit und Probenpositionssystem sind mechanisch, optisch und elektronisch aufeinander abgestimmt und verkoppelt.

Nach dem Scannen der Probe können Bildpunkte markiert und in die Meßposition für die FCS-Einheit gebracht und vermessen werden.

Die Auswahl der interessierenden Punkte kann automatisch nach vorgegebenen Kriterien (z.B. Raster, Strukturerfassung des Bildes) oder durch den Benutzer nach individueller Bewertung des mit der Scaneinheit aufgenommenen Bildes erfolgen.

Der vorgeschlagene Aufbau ermöglich die gezielte Auswahl mikroskopisch kleiner Meßorte in der mit der FCS-Methode zu untersuchenden Probe. Außerdem ist es möglich, aus einer systematischen Folge von FCS-Messungen die räumliche Variation der FCS-Analysenergebnisse bildhaft zu erfassen, darzustellen und dem LSM-Bild zuzuordnen.

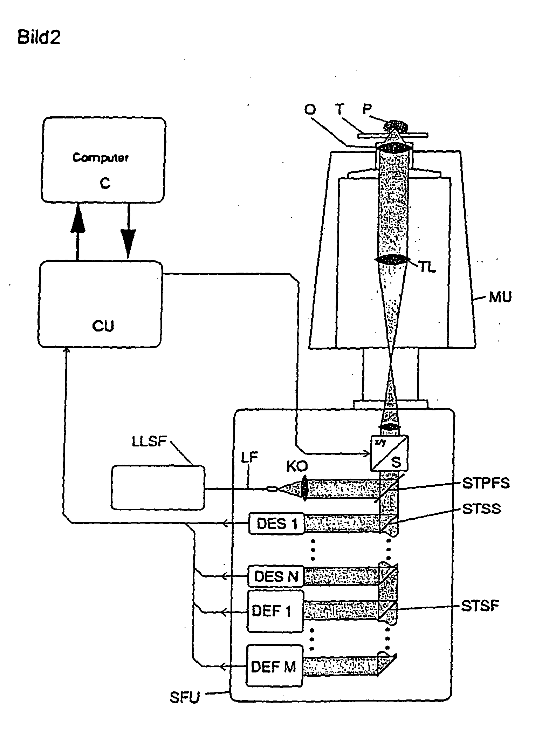

In Bild 2 ist eine weitere vorteilhafte Anordnung dargestellt.

Hier ist an/in einer gemeinsamen Einheit SFU eine gemeinsame Lasereinheit LLSF vorgesehen sowie ein gemeinsamer Primärstrahlteiler STPFS. Dargestellt sind separate Strahlteiter und Detektoren DEF, STSF und DES, STSS für die LSM- und FCS-Detektion. Vorteilhaft können die Detektoren DEF und DES baugleich sein. Der Meß- und Auswertemodus kann mittels der Kontrolleinheit CU gewählt werden.

Die vorteilhafte Anordnung ergibt sich durch die gemeinsame Lokalisation der LSM- und der FCS-Detektionskanälen in einer Einheit. Ähnlich dem Aufbau, der in Bild 1 beschrieben wurde, wird Laserlicht einer oder mehrerer Wellenlängen mit Hilfe einer Kollimationsoptik und des primären Srahlteilers durch eine Scaneinheit in die Probe fokusiert. Ein besonderer Vorteil dieses Aufbaus ist, daß auch der Meßort für die FCS-Messung mit Hilfe der Scanner gewählt werden kann. Insbesondere ist es dadurch möglich, die FCS-Analysenmethode zu einem bildgebenden Verfahren (Scanning FCM: S-FCSM) vorteilhaft zu erweitern. Reflektiertes Licht und Fluoreszenzlicht wird vom Objektiv aufgefangen, durchläuft wiederum die Scanner und wird von einem oder mehreren sekundären Strahlteilem in einen oder mehrere LSM-Detektionskanäle oder FCS-Detektionskanäle umgeleitet. Dabei kann eine Trennung nach spektralen Eigenschaften oder Polarisationseigenschaften erfolgen. Das detektierte Licht induziert elektrische Signale die zur Kontrolleinheit mit angeschlossenem Computer nebst geeignetem Programm geleitet und dort zur FCS-Analyse bzw. zur Bild-rekonstruktion verwendet werden.

Das Laser-Scanning-Mikroskop ist hier so modifiziert, daß es Komponenten und Auswerteverfahren enthält, die es erlauben, auch FCS-Messungen durchzuführen. Scankomponenten und FCS-Komponenten sind erfindungsgemäß so kombiniert, daß eine Strahlteitung bzw. Strahlumschaltung, wie sie im Bild 1 dargestellt wurde, entfallen kann. Der Vorteil dieser Anordnung besteht darin, daß zur Durchführung der FCS-Analysen an den vorher ausgewählten Punkten keine Probenbewegungen mehr erforderlich sind, da der Meßort mit Hilfe der Scanner und durch vertikale Verstellung des Objektivs eingesteilt werden kann.

Die wirkungsmäßige Verbindung der Betriebsmodi erfolgt, indem entweder direkt während des Scanvorganges der Scanner angehalten wird und an dem hierdurch eingestellten Probenpunkte eine FCS-Auswertung verfolgt oder nach dem Scanvorgang durch Einstellen der Spiegel oder Verstellen des Tisches bei stehenden Scannerspiegein an bestimmten Punkten eine FCS Auswertung erfolgt

Durch die Anordnung gemaß Bild 2 sind FCS-Messungen mit hoher Positioniergenauigkeit in kürzerer Folge möglich. Dieser vorgeschlagene Aufbau stellt ein scannendes Fluoreszenz-Korrelations-Mikroskop (S-FCM) dar, welches erfindungsgemäß sowohl strukturelle als auch biochemische Informationen bildhaft darstellen kann.

## Patentansprüche

1. Verfahren zur Detektion von Fluoreszenzlicht mit wenigstens einer bildgebenden Mikroskopeinheit beruhend auf dem Prinzip der Laser- Scanning -Mikroskopie und wenigstens einer Gerätekomponente zur Analyse molekularer Wechselwirkungen in kleinen Volumina mittels der Fluoreszenz- Korrelations-Spektroskopie, **gekennzeichnet dadurch, daß**
Meßorte für die Analyse molekularer Wechselwirkung mit Hilfe des bildgebenden Verfahrens mindestens zweidimensional bestimmt und ausgewählt werden
sowohl die bildgebende Mikroskopeinheit als auch die Gerätekomponente mit einer gemeinsamen Steuereinheit betrieben werden,
die Analysenergebnisse dem Bild der bildgebenden Mikroskopeinheit zugeordnet
und über die Steuereinheit und einen Computer mindestens die Analysenergebnisse der Gerätekomponente bildhaft dargestellt werden,
wobei die Probe punktweise mindestens zweidimensional mit Beleuchtungslicht abgescannt und das von der Probe kommende Licht über mindestens einen ersten
und während des Scanvorganges und / oder nach dem Scanvorgang für mindestens einen Probenpunkt eine FCS - Auswertung erfolgt

2. Verfahren nach Anspruch 1, wobei die Auswahl des Probenortes für die FCS-Messung mit Hilfe eines verfahrbaren Probentisches und/oder vertikaler Verstellung des Objektives manuel und/ oder automatisch erfolgt

3. Verfahren nach einem der Ansprüche 1-2, wobei die Auswahl des Probenortes für die FCS-Messung manuel und/ oder automatisch mit Hilfe von mindestens einem Scanner erfolgt.

4. Verfahren nach Anspruch 1 , wobei für mindestens einen Probenpunkt eine Abspeicherung und speichermäßige Zuordnung sowohl des beim Scannen detektierten Wertes als auch mindestens eines bei der FCS-Auswertung detektierten Wertes erfolgt.

5. Verfahren nach Anspruch 1 oder 4 wobei die obenstehenden Verfahrensschritte für mehrere automatisch und/ oder manuell vorgewählte Probenpunkte erfolgen.

6. Verfahren nach einem der Ansprüche 1,4 oder 5, **dadurch gekennzeichnet, daß** entweder direkt während des Scanvorganges der Scanner angehalten wird und an dem hierdurch eingestellten Probenpunkt eine FCS- Auswertung erfolgt oder nach dem Scanvorgang durch Einstellen der Spiegel oder Verstellen des Tisches bei stehenden Scannerspiegeln eine FCS Auswertung erfolgt .

## Claims

1. Method for detection of fluorescence light with at least one image-forming microscope unit based on the principle of laser scanning microscopy and at least one device component for analysis of molecular interactions in small volumes by means of fluorescence correlation spectroscopy, **characterised in that** measuring sites for the analysis of molecular interaction with the aid of the image-forming method are determined and selected at least two dimensionally both the image-forming microscope unit and also the device components are operated by a common control unit,
the analysis results are allocated to the image of the image-forming microscope unit,
and by means of the control unit and a computer at least the analysis results of the device components are shown as an image,
wherein the sample is scanned pointwise at least two dimensionally with illumination light, and the light coming from the sample is detected via at least one first detector,
and during the scanning process and/or after the scanning process an FCS evaluation is carried out for at least one sample point.

2. Method as claimed in claim 1, wherein the selection of the sample site for the FCS measurement is effected manually and/or automatically with the aid of a sample stage which can travel and/or by vertical displacement of the objective.

3. Method as claimed in any one of claims 1-2, wherein the sample site for the FCS measurement is selected manually and/or automatically with the aid of at least one scanner.

4. Method as claimed in claim 1, wherein for at least one sample point a storage process and storage allocation both of the value detected during scanning and also of at least one value detected during the FCS evaluation take place.

5. Method as claimed in claim 1 or 4, wherein the above-mentioned method steps are carried out for a plurality of automatically and/or manually pre-selected sample points.

6. Method as claimed in any one of claims 1, 4 or 5, **characterised in that** either the scanner is stopped actually during the scanning process and an FCS evaluation takes place on the sample point thereby set or, after the scanning process, an FCS evaluation takes place by adjustment of the mirrors or displacement of the stage when the scanner mirrors are stationary.

## Revendications

1. Procédé de détection de lumière fluorescente ayant au moins une unité de microscope à imagerie reposant sur le principe de microscopie à scanning au laser et au moins un composant d'appareil pour l'analyse d'interactions moléculaires dans des petits volumes au moyen de la spectroscopie à corrélation de fluorescence, **caractérisé en ce que** :
- des lieux de mesure pour l'analyse d'une interaction moléculaire sont déterminés et sélectionnés au moins dans un plan bidimensionnel à l'aide du procédé d'imagerie ;
- à la fois l'unité de microscope à imagerie et les composants d'appareil sont utilisés avec une unité de commande commune ;
- les résultats d'analyse sont attribués à l'image de l'unité de microscope à imagerie ;
- et au moins les résultats d'analyse des composants d'appareil peuvent être représentés sous forme d'images par le biais de l'unité de commande et d'un ordinateur ;
où l'échantillon est scanné par points au moins dans un plan bidimensionnel avec la lumière d'éclairage et la lumière provenant de l'échantillon est détectée par le biais d'au moins un premier détecteur ; et une analyse FCS est exécutée pour au moins un point de l'échantillon pendant le processus de scanning et/ou après le processus de scanning.

2. Procédé selon la revendication 1, où la sélection du lieu de l'échantillon pour la mesure FCS est réalisée manuellement et/ou automatiquement à l'aide d'une table d'échantillon mobile et/ou d'un déplacement vertical de l'objectif.

3. Procédé selon l'une quelconque des revendications 1 ou 2, où la sélection du lieu de l'échantillon pour la mesure FCS est réalisée manuellement et/ou automatiquement à l'aide d'au moins un scanner.

4. Procédé selon la revendication 1, où une mise en mémoire et une attribution selon la mémoire à la fois de la valeur détectée dans le scanning et d'au moins une valeur détectée dans l'analyse FCS sont réalisées pour au moins un point de l'échantillon.

5. Procédé selon l'une quelconque des revendications 1 ou 4, où les étapes de procédé précitées sont réalisées pour plusieurs points de l'échantillon sélectionnés préalablement automatiquement et/ou manuellement.

6. Procédé selon l'une quelconque des revendications 1, 4 ou 5, **caractérisé en ce que**, soit directement pendant le processus de scanning, le scanner est arrêté et une analyse FCS est réalisée au point de l'échantillon ainsi défini, soit après le processus de scanning, une analyse FCS est réalisée par le réglage des miroirs ou le déplacement de la table, les miroirs du scanner étant fixes.
